# EUROPEAN PATENT APPLICATION

(11) **EP 1 530 347 A1**
(43) Date of publication of application: **11.05.2005**
(21) Application number: 04077941.5
(22) Date of filing: 25.10.2004
(51) Int. Cl.: H04M 1/04, H02J 7/00

(54) **Supporting device for a rechargeable electrical appliance, in particular a mobile telephone**

(30) Priority: 06.11.2003 DK 200301649
(71) Applicant: HMI Trading ApS, 8310 Tranbjerg J (DK)
(72) Inventor: Ebbesen, Michael, 8270 Hojbjerg (DK); Vincents, Nina, 8310 Tranbjerg J (DK)
(74) Representative: Schmidt, Jens Joergen

(57) **Abstract**

A device is disclosed for supporting a mobile telephone, which device is supported in a functional position by an electrical plug passing though an aperture of the device and into a vertical electrical socket, regardless of the orientation of the electrical socket and the corresponding orientation of the electrical plug.

The applicability of known devices is improved by designing the device so that the plug may be oriented in two substantially perpendicular positions in the vertical electrical socket while the receptacle for the electrical appliance remains in a functional position. Thereby, the device may be used with different sockets that are oriented with one of two mutually perpendicular orientations, e.g. that the two holes of a continental European socket may be oriented along a vertical line or along a horizontal line.

## Description

The present invention relates to a device for supporting a mobile telephone, which device is supported in a functional position by an electrical plug passing though an aperture of the device and into a vertical electrical socket, regardless of the orientation of the electrical socket and the corresponding orientation of the electrical plug.

### BACKGROUND OF THE INVENTION

Devices for supporting a mobile telephone or other portable electrical appliances with a rechargeable battery are known from the prior art, such as from GB 2 364 832, GB 2 381 987 and DE 200 19 563 U1, which devices are supported by the electrical plug of the charger passing through apertures of the device and into an electrical socket in a wall.

It has been found by the present inventor that the applicability of the known devices may be substantially improved by designing the device so that the plug may be oriented in two substantially perpendicular positions in the vertical electrical socket while the receptacle for the electrical appliance remains in a functional position. Thereby, the device may be used with different sockets that are oriented with one of two mutually perpendicular orientations, e.g. that the two holes of a continental European socket may be oriented along a vertical line or along a horizontal line.

The device according to the present invention is temporarily fastened to the socket by the temporary engagement between the device and the electrical plug.

The present invention is designated to be used with a mobile telephone, but a similar device may be applied to all sorts of portable, rechargeable electrical appliances, and the present invention relates to such devices as well.

### BRIEF DESCRIPTION FO THE PRESENT INVENTION

Thus, the present invention relates to a device for a supporting a rechargeable electrical appliance, in particular a mobile telephone, comprising
a receptacle by which the appliance may be received and supported, and
a support part having an aperture defined therein through which an electrical plug may pass into a vertically arranged electrical socket, so that the plug supports the device in a position in which the receptacle is functional, where the device is so configured that the plug may be oriented in two positions being mutually substantially perpendicular and in that the device is non-rotatable with respect to said plug.

By the term aperture as used herein is understood one or more through holes in the support part, through which parts of the plug may pass.

In particular, the aperture may be so configured that the plug may be oriented in two positions being mutually substantially perpendicular. Alternatively, the receptacle may be suitable for supporting the appliance when oriented in two mutually perpendicular positions.

In a preferred embodiment, the perimeter of said aperture or apertures when in use is engaged by the electrically insulating part of said plug and not by the electrical conductor pins. The aperture may in particular be so configured that the electrically insulating part of said non-round plug might be oriented within the same aperture in two positions being mutually substantially perpendicular. The engagement between the perimeter and the electrically insulating part of said plug is preferably of a character so that the device is non-rotatable with respect to said plug. The aperture may in particular be configured for receiving a flat electrical plug with tapering ends and two or three round pins, a so-called continental European plug.

The device may be made from a sheet of material that is bent into shape, comprising a vertical plate part with said aperture and a receptacle extending from an upper edge thereof.

It is advantageous that the receptacle is suitable to support a mobile telephone so that the front side thereof is visible and accessible.

The receptacle may comprise an upward facing inclined supporting surface having a fence part extending upwards from the edge part of said supporting surface. The supporting surface is preferably inclined 15 to 60 degrees to horizontal, most preferred 25-40 degrees to horizontal.

Also, the device is preferably equipped with a cord tidy structure so that excessive lengths of the cord between the charger and the appliance may be tidied up on the structure.

### BRIEF DESCRIPTION OF THE DRAWING

Preferred embodiments of the present invention are for illustration thereof discussed in the following with reference to the enclosed drawing, of which
Fig. 1 shows an embodiment of the device according to the present invention as seen from the side,
Fig. 2A shows an embodiment of the invention as seen from the front with a first design of the aperture,
Fig. 2B shows the embodiment of Fig. 2A as seen from the back,
Fig. 2C shows the embodiment of Fig. 2A as seen from the side,
Fig. 3A shows an embodiment of the invention as seen from the front with a second design of the aperture,
Fig. 3B shows the embodiment of Fig. 3A as seen from the back,
Fig. 3C shows the embodiment of Fig. 3A as seen from the side,
Fig. 4 shows a perspective view of an embodiment of the invention with an aperture design as shown in Figs. 3A - 3C.
Fig. 5A shows an embodiment of the invention as seen from the side with a second design of the collar,
Fig. 5B shows the embodiment of Fig. 5A as seen from the bottom,
Fig. 6A shows the embodiment of Fig. 5A as seen from in perspective from the rear, and
Fig. 6B shows the embodiment of Fig. 5A as seen from in perspective from the front.

### DETAILED DESCRIPTION OF EMBODIMENTS OF THE INVENTION

Embodiments of the present invention are disclosed in the following for illustration of the invention only with reference to the drawing.

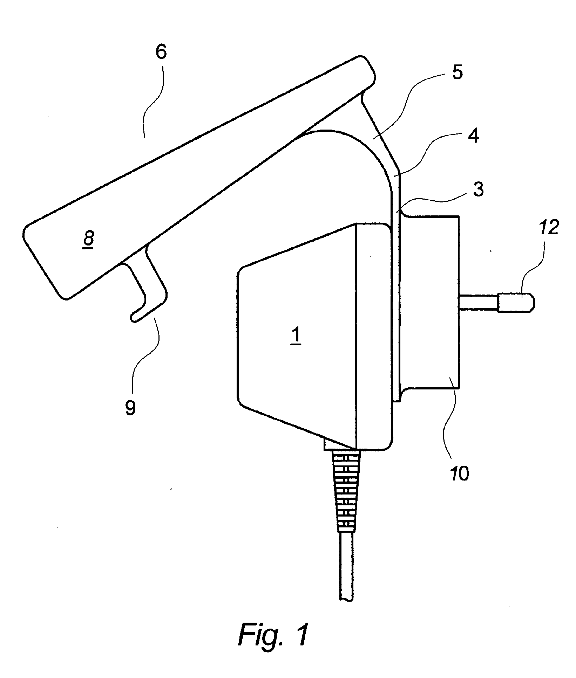

Fig. 1 shows an embodiment of the device according to the present invention as seen from the side and with the plug of a charger 1 passing through the aperture 2 of the support part 3. The support part 3 is at its upper end 4 connected via a connecting part 5 to a receptacle 6 for carrying a mobile telephone when connected to the charger 1. The upward facing supporting surface 7 of the receptacle 6 is inclined 32° to horizontal, so that the telephone when placed upon it will present its front surface to the user. A fence part 8 prevents the mobile telephone from sliding off of the supporting surface 7. The hook 9 formed on the lower surface of the receptacle 6 and the connecting part 5 between the support part 3 and the receptacle 6 provide together a cord tidy structure. The aperture 2 of the support part 3 is on the side facing the electrical socket equipped with a collar 10 so that the inner shape of the aperture 2 runs through a thicker layer of material, whereby a better support of the device by the electric plug is provided. The collar 10 is however not essential for a device of the present invention to function properly.

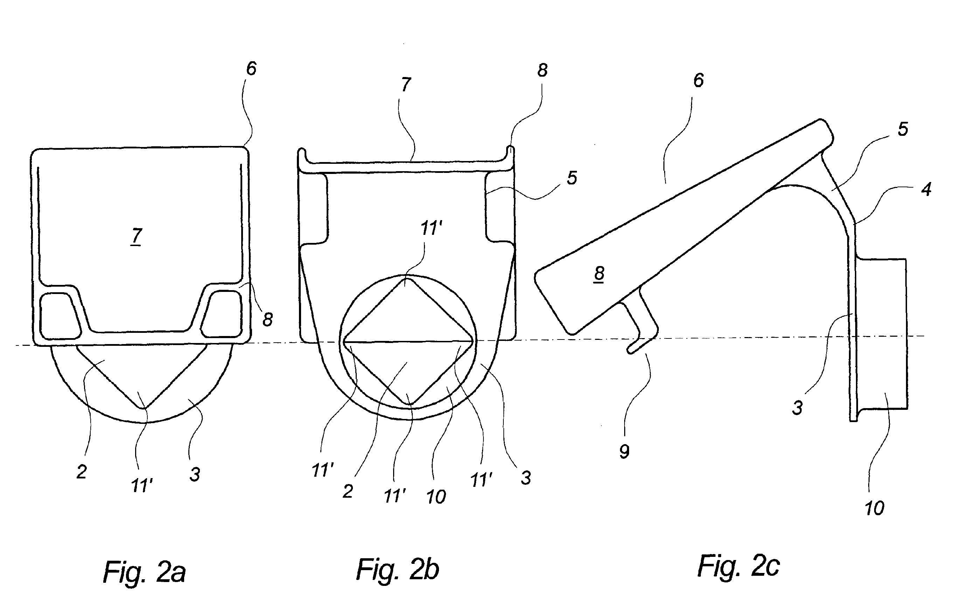

A device with a first design of the aperture 2 is shown in Figs. 2A - 2C. The aperture 2 is of a quadratic shape and is designed to receiving a flat continental European plug so that the aperture 2 will make a close, non-rotable fit to the plug. The tapering ends of the plug will fit into two opposing comers 11 of the aperture 2, so that the plug may be oriented vertically or horizontally, i.e. that the pins 12 of the plug will be in line either vertically or horizontally, and the receptacle 6 will still be oriented to receive and hold the mobile telephone.

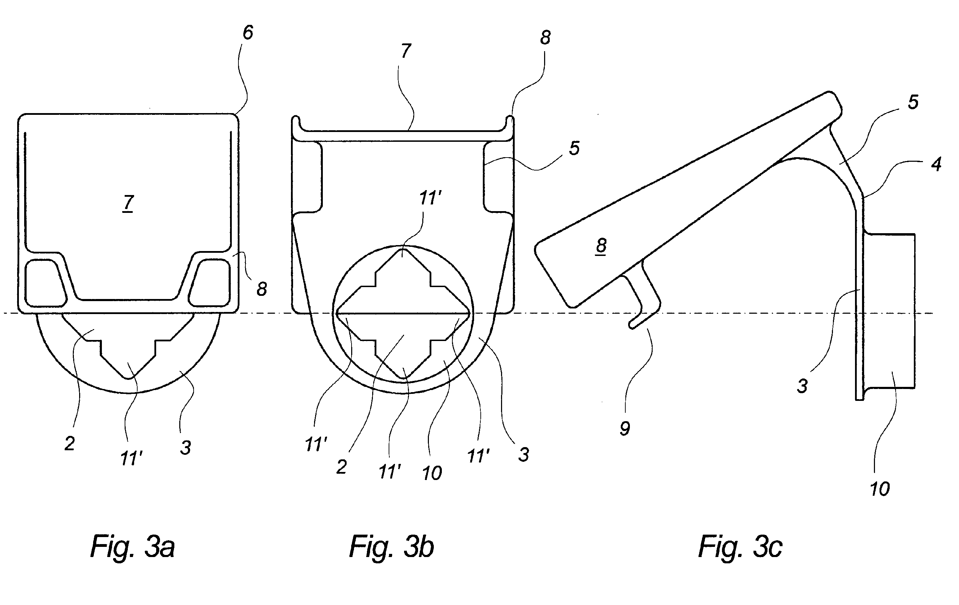

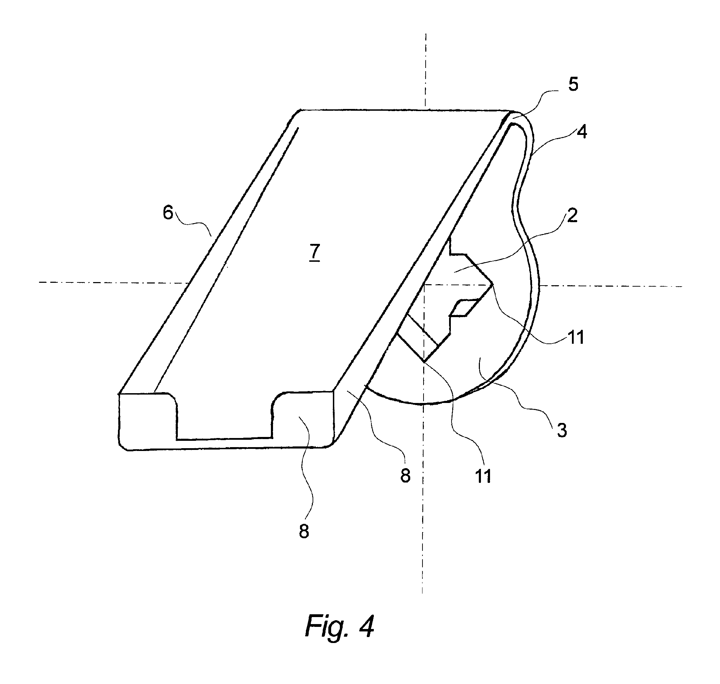

Devices with a second design of the aperture 2 are shown in Figs. 3A - 3C and Fig. 4. This aperture 2 is designed with a star shape with four arms 11', which are shaped to fit the tapering ends of the plug more closely than the above discussed quadratic design and thus provides an even better support thereon. The plug is received by two opposing arms 11' of the aperture 2.

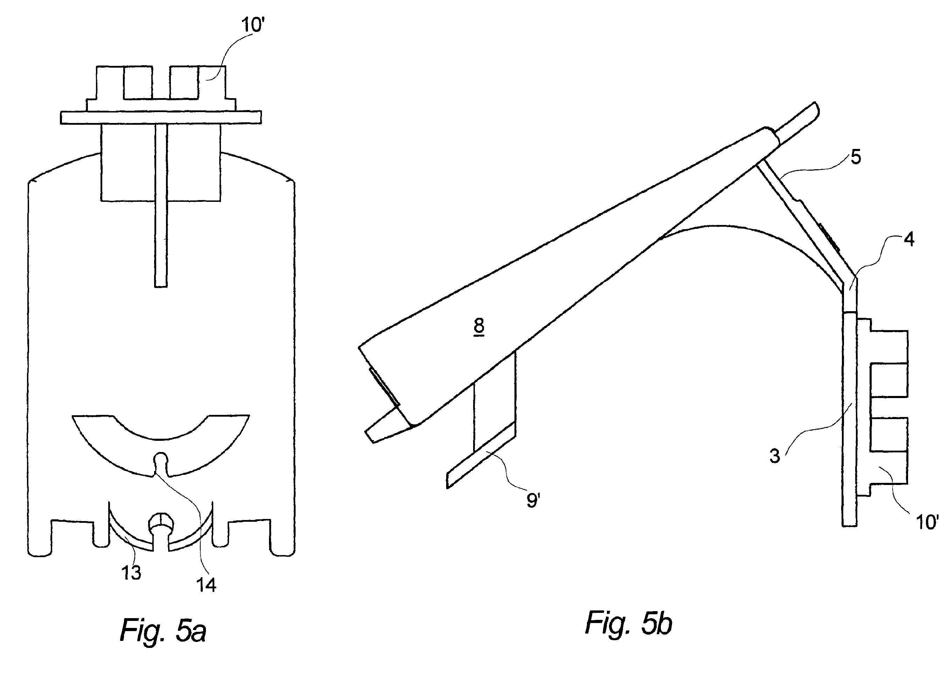

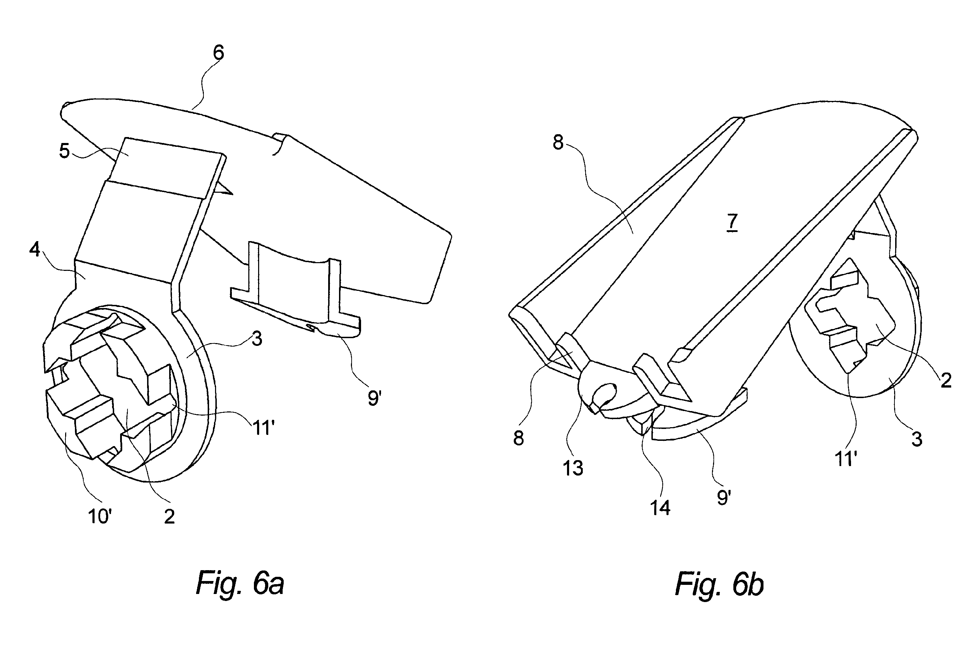

Devices with a second design of the collar 10', a second design of the hook 9' and means for accommodating a plug 13 are shown in Figs. 5A, 5B, 6A and 6B. The aperture 2 is designed with a star shape with four arms 11', as described in the second design, but here material has been removed from the collar 10' at the ends of the four arms 11' so that the cross section of the collar 10' is substantially square. This is done to make room for the ground connection that certain electrical sockets are equipped with at the sides or at the top and bottom. The hook 9' is in this design provided with a slit 14 to secure the cord when it is wound around the hook 9'. In this embodiment of the invention, means for accommodating a plug 13 is provided at the end of the supporting surface 7. Said plug accommodating means is provided to secure a mobile telephone plug at the end of the charger cord when it is not connected to a mobile telephone.

The shown designs of devices according to the present invention are only examples thereof, and e.g. other designs of the aperture as a plurality of apertures and designs to receiving other types of plugs may be provided within the scope of the present invention.

## Claims

1. A device for a supporting a rechargeable electrical appliance, in particular a mobile telephone, comprising
a receptacle (6) by which the appliance may be received and supported, and
a support part (3) having an aperture (2) defined therein through which an electrical plug may pass into a vertically arranged electrical socket, so that the plug supports the device in a position in which the receptacle (6) is functional,
**characterised in that**
the device is so configured that the plug may be oriented in two positions being mutually substantially perpendicular and **in that** the device is non-rotatable with respect to said plug.

2. A device according to claim 1, wherein the aperture (2) is so configured that the plug may be oriented in two positions being mutually substantially perpendicular.

3. A device according to claim 1 or 2, wherein the perimeter of said aperture (2) when in use is engaged by the electrically insulating part of said plug.

4. A device according to claim 3, wherein device is non-rotatable with respect to said plug due to the engagement between the perimeter of said aperture (2) and the electrically insulating part of said plug.

5. A device according to claim 3 or 4, wherein said aperture (2) is configured for receiving a non-round electrically insulating part of said plug in two substantially perpendicular positions.

6. A device according to any of claims 3 to 5, wherein said aperture (2) is configured for receiving a flat continental European plug.

7. A device according to any of the preceding claims, wherein the device is made from a sheet of material, that is bent into shape, comprising a vertical plate part (3) with said aperture (2) and a receptacle (6) extending from an upper edge thereof.

8. A device according to any of the preceding claims, wherein the receptacle (6) is suitable to support a mobile telephone so that the front side thereof is visible and accessible.

9. A device according to claim 8, wherein the receptacle (6) comprises an upward facing inclined supporting surface (7) having a fence part (8) extending upwards from the edge part of said supporting surface (7).

10. A device according to any of the preceding claims, further comprising a cord tidy structure (5, 9).
